# EUROPÄISCHE PATENTANMELDUNG

(11) **EP 0 985 568 A2**
(43) Veröffentlichungstag der Anmeldung: **15.03.2000**
(21) Anmeldenummer: 99117001.0
(22) Anmeldetag: 28.08.1999
(51) Int. Cl.: B60J 3/02

(54) **Sonnenblende für Fahrzeuge**

(30) Priorität: 12.09.1998 DE 19841848
(71) Anmelder: Volkswagen Aktiengesellschaft, 38436 Wolfsburg (DE)
(72) Erfinder: Karg, Horst, 38442 Wolfsburg (DE); Hayn, Hans-Joachim, 38448 Wolfsburg (DE)

(57) **Zusammenfassung**

Die Erfindung betrifft eine Sonnenblende (1) für Fahrzeuge mit einem Sonnenblendenkörper (2), der an seiner einen Breitseite (3) eine erste Ausnehmung (4) zur Aufnahme eines ersten Funktionsteils (5) und an seiner gegenüberliegenden Breitseite (6) eine zweite Ausnehmung (7) zur Aufnahme eines zweiten Funktionsteils (8) aufweist. Die beiden Funktionsteile (5, 8) sind miteinander verbunden und dadurch in den Ausnehmungen (4, 7) festgelegt. Erfindungsgemäß ist der Sonnenblendenkörper (2) von einem elastischen Bezugstoff (10) als Hüllüberzug umgeben, durch den hindurch die Funktionsteile (5, 8) so miteinander verbunden sind, daß der Bezugstoff (10) ohne Fensterausschnitt mit den Funktionsteilen (5, 8) mit in die Ausnehmungen (4, 7) eingezogen ist und sich an die randseitigen Ausnehmungswandungen (11, 12) anschmiegt sowie durch die gegenseitige, den Bezugstoff (10) durchdringende Verbindung (15) der beiden Funktionsteile (5, 8) festgelegt ist.

## Beschreibung

Die Erfindung betrifft eine Sonnenblende für Fahrzeuge nach dem Oberbegriff des Anspruchs 1.

Es ist allgemein üblich, an Sonnenblenden weitere Funktionsteile, insbesondere Spiegel, Aufnahmekassetten für Gegenstände, wie für Sonnenbrillen oder ähnlichem anzubringen. Bei einer bekannten Sonnenblende ist in einer Ausnehmung an einer Breitseite des Sonnenblendenkörpers eine Spiegelkassette mit aufklappbarer Spiegelabdeckung befestigt (DE 196 50 923 A1). Zudem ist an der gegenüberliegenden Breitseite ein Ticketthalter mit einem Einsteckfach und einem Klemmelement ausgebildet. In einer ähnlichen Ausführungsform einer Sonnenblende ist in einer Ausnehmung einer Breitseite des Sonnenblendenkörpers eine Spiegelkassette eingeklipst (US-PS 5 022 599). In einer entsprechenden Ausführungsform ist eine Aufnahmekassette für Gegenstände, insbesondere für Sonnenbrillen in einer Ausnehmung im Blendenkörper über dortige Gewindehülsen gehalten, über die die Kassette mit dem Blendenkörper verschraubt ist (US-PS 4 275 916).

Zudem ist eine stoffschlüssige Befestigung einer Spiegelkassette in einer Ausnehmung eines Sonnenblendenkörpers bekannt (EP 0 609 558 B1), die durch eine Materialerwärmung mit einem Erweichen und Anschmelzen des Materials erreicht wird.

Bei einer weiter bekannten Ausführungsform einer Sonnenblende (EP 0 036 448 B1) ist ein Sonnenblendenkörper aus Schaumkunststoff, der eine von einer Breitseite ausgehende, zur Aufnahme eines Spiegelgehäuses dienende Ausnehmung aufweist, von einer Hüllfolie umgeben, die auch die Ausnehmung unter Anlage an deren Wandungen überdeckt. Die Hüllfolie weist im Überdeckungsbereich der Ausnehmung eine gegenüber ihren anderen Bereichen wesentlich erhöhte Elastizität und/oder netzartige Ausbildung auf. Dadurch wird die Hüllfolie beim Einsetzen des Spiegelgehäuses mit in die Ausnehmung eingezogen und schmiegt sich an die Ausnehmungswandungen an. Zur Befestigung wird hier in einer ersten Variante vorgeschlagen, lediglich eine Spiegelplatte in eine Ausnehmung mit umlaufenden Hinterschneidungskanten einzudrücken. Dadurch muß die Hüllfolie im Bereich der Hinterschneidungskanten ungünstig stark geknickt und umgebogen werden, so daß unerwünschte Faltenbildungen und Beschädigungen nicht auszuschließen sind. Zudem ist eine solche Halterung durch Hinterschneidungskanten für Kassetten ungünstig, da die Stärke der Hinterschneidungskanten von der möglichen und ohnehin geringen Kassettentiefe in einem Sonnenblendenkörper abgeht. In einer anderen Alternative ist vorgeschlagen, ein Spiegel-gehäuse über Kleberpunkte zu befestigen. Bei einer im Ausnehmungsbereich flächig durchgehenden Hüllfolie ist dann diese in einem ersten Arbeitsgang am Boden der Ausnehmung anzukleben und erst in einem zweiten Arbeitsgang kann dann das Spiegelgehäuse an der eingezogenen Hüllfolie festgeklebt werden. Bei einer Struktur der Hüllfolie mit Durchbrechungen im Ausnehmungsbereich soll der Kleber durch diese Durchbrechungen durchtreten, so daß eine unmittelbare Verklebung zwischen dem Spiegelgehäuse und dem Sonnenblendenkörper erfolgt. Eine sichere Verklebung dürfte nur über eine Mehrzahl von Klebepunkten möglich sein, wobei nur dann anzunehmen ist, daß statistisch auch Klebe-punkte dabei sind, bei denen der Kleber durch die Durchbrechungen der Hüllfolie tatsächlich durchgedrungen und nicht von dieser abgedeckt ist. Zudem ist das hantieren mit einem Kleber im allgemeinen umständlich und aufwendig.

Bei einer gattungsgemäßen Sonnenblende (EP 0 622 272 B1) weist ein Sonnenblenden-körper an seiner einen Breitseite eine erste Ausnehmung zur Aufnahme eines ersten Kassettenteils und an seiner gegenüberliegenden Breitseite eine zweite Ausnehmung zur Aufnahme eines zweiten Kassettenteils auf, wobei diese Ausnehmungen hier in einem Ausführungsbeispiel als durchgehende Öffnung im Sonnenblendenkörper ausgeführt sind. Ein Kassettenteil ist als Spiegelgehäuse mit einem Klappdeckel und das andere Kassettenteil mit einem herausklappbaren Aufnahmefach ausgebildet. Die beiden Kassettenteile haben Randflansche, mit denen sie an den Außenseiten des Sonnenblendenkörpers anliegen und sind im Inneren des Blendenkörpers über Rastverbindungen direkt miteinander verbunden. Ein Hüllüberzug über den Sonnenblendenkörper ist hierbei nicht vorgesehen.

Aufgabe der Erfindung ist es, eine gattungsgemäße Sonnenblende so weiterzubilden, daß mit einfachen Mitteln und Maßnahmen ein gut sitzender Hüllüberzug angebracht werden kann. Diese Aufgabe wird mit den Merkmalen des Anspruchs 1 gelöst.

Gemäß Anspruch 1 ist der Sonnenblendenkörper, der vorzugsweise aus einem Schaum-kunststoff hergestellt ist, von einem elastischen Bezugstoff als Hüllüberzug umgeben, wobei die beidseitig in den jeweiligen Ausnehmungen eingesetzten Funktionsteile durch den Bezugstoff hindurch miteinander verbunden sind. Der Bezugstoff ist dazu ohne einen Fensterausschnitt im Bereich der Ausnehmungen hergestellt und wird bei der Bestückung des Sonnenblendenkörpers zusammen mit den Funktionsteilen in die Ausnehmungen eingezogen. Dadurch schmiegt sich der Bezugstoff ohne Faltenbildung an die randseitigen Ausnehmungswandungen an und ist durch die gegenseitige, den Bezugstoff durchdringende Verbindung der beiden Funktionsteile sicher festgelegt und gehalten. Der Bezugstoff kann dabei textiler Natur oder eine Kunststoffolie sein. Insbesondere kann hier der ohne Fensteröffnung durchgehend in einer Ausnehmung gespannte Bezugstoff nicht aus dem Rand-bereich der Ausnehmung austreten und dort bei der Montage oder später durch mechanische Belastungen unschöne Falten und Beulen bilden.

Als Funktionsteile werden vorzugsweise topfförmige Kassetten mit am Sonnenblendenkörper und dem Bezugstoff anliegenden äußeren Randflanschen vorgeschlagen. Dazu ist vorteilhaft eine Spiegelkassette an der Breitseite des Sonnenblendenkörpers, die dem Benutzer in der Gebrauchslage zugänglich ist und eine Ablagekassette mit wenigstens einem Ablagefach und/oder einem Ticketthalter an der anderen Breitseite des Sonnenblendenkörpers, die dem Benutzer in der Nichtgebrauchslage zugänglich ist, vorzusehen.

Die Funktionsteile insbesondere als Kassetten können an ihren im Blendenkörper gegenüberliegenden Teilen auf einfache und preisgünstige Weise durch Rastverbindungen und Klipverbindungen befestigt werden. Dadurch werden einerseits die Funktionsteile sicher in den Ausnehmungen gehalten und zudem der Bezugstoff gespannt und festgelegt. Solche Rast- und Klipverbindungen können sowohl an den Kassettenböden und/oder vorteilhaft auch an stabilen Kassettenrahmen angebracht sein.

Für eine variable Bestückung der Sonnenblende mit ggf. unterschiedlichen, zur Verfügung stehenden Kassettenausführungen wird vorgeschlagen, die Außenkontur spiegelbildlich in der Art von Gleichteilen auszuführen. Damit sind beispielsweise mit gleichen Außenrahmen unterschiedliche Kassettenkombinationen auf einfache Weise und mit günstigen Herstellkosten durchführbar. Für andere Bestückungen oder zu Reparaturzwecken können Kassetten einfach ohne Zerstörungen am Sonnenblendenkörper ausgetauscht werden.

Der Bezugstoff kann im Bereich der Ausnehmungen ggf. eine höhere Elastizität gegenüber den anderen Bereichen und/oder eine Netzstruktur aufweisen, wodurch das Einziehen in eine Ausnehmung begünstigt wird.

Die dargestellte Funktionsteilanordnung eignet sich für eine Ausführung, bei der zwischen den beiden gegenüberliegenden Ausnehmungen ein Blendenkörpersteg als Materialwand belassen ist, ebenso wie für eine Ausführung bei der die beiden Ausnehmungen eine durchgehende Öffnung im Sonnenblendenkörper bilden. Bei der ersten Ausführung ist lediglich die Verbindung zwischen den Funktionsteilen bevorzugt mit entsprechend langen Raststiften durch den Bezugstoff und zusätzlich auch durch den Blendenkörpersteg hindurch zu führen. Die Raststifte können hier bei einem Blendenkörpersteg aus einem Schaumkunststoff einfach durchgestochen werden.

Vorzugsweise sollen jedoch die beiden Funktionsteile bevorzugt als Kassetten über den Bezugstoff direkt aneinander anliegend verklipst werden.

Die Funktionsteile, insbesondere als Kassettenteile können auch in der aufgezeigten Anordnung in an sich bekannter Weise unterschiedliche Kassettenteile, Kassettenfächer und/oder Abdeckungen umfassen, wobei diese je nach Bedarf nach oben oder nach unten ausklappbar angeordnet sein können.

Anhand einer Zeichnung wird die Erfindung näher erläutert.

Es zeigen:
Fig. 1 eine schematische Darstellung einer Sonnenblende für Fahrzeuge, und
Fig. 2 einen Schnitt entlang der Linie A-A der Fig. 1.

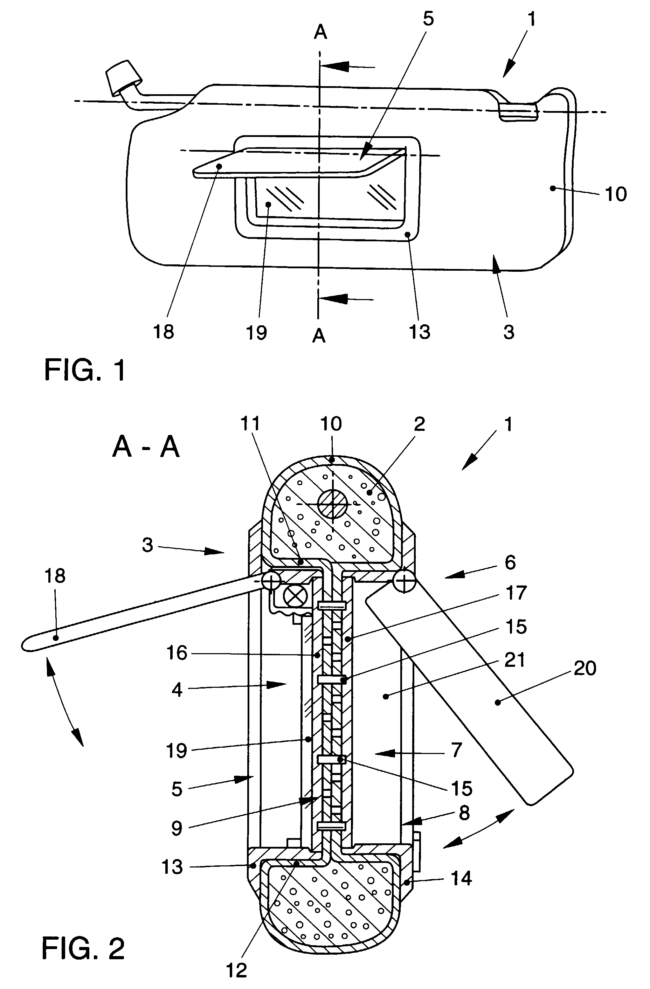

Wie dies aus den Fig. 1 und 2 ersichtlich ist, umfaßt eine Sonnenblende 1 einen aus einem Schaumkunststoff hergestellten Sonnenblendenkörper 2. Dieser Sonnenblendenkörper 2 weist an seiner einen Breitseite 3 eine erste Ausnehmung 4 zur Aufnahme eines ersten Kassettenteils 5 und an seiner gegenüberliegenden Breitseite 6 eine zweite Ausnehmung 7 zur Aufnahme eines zweiten Kassettenteils 8 auf. Dabei bilden die beiden Ausnehmungen 4, 7 im Sonnenblendenkörper 2 eine durchgehende Öffnung 9, wie dies aus der Fig. 2 ersichtlich ist.
Der Sonnenblendenkörper 2 ist von einem elastischen Bezugstoff 10 als Hüllüberzug umgeben, der im Bereich der ersten Ausnehmung 4 und der zweiten Ausnehmung 7 ohne einen Fensterausschnitt hergestellt ist. Dadurch wird der elastische Bezugstoff 10 bei der Bestückung des Sonnenblendenkörpers 2 mit dem ersten Kassettenteil 5 und dem zweiten Kassettenteil 8 so in die Ausnehmungen 4, 7 eingezogen, daß sich der Bezugstoff 10 ohne Faltenbildung an die randseitigen Ausnehmungswandungen 11, 12 anschmiegt, wie dies aus der Fig. 2 ersichtlich ist. Dabei ist die durchgehende Öffnung 9 im Sonnenblendenkörper 2 in einer etwa mittleren Ebene nur vom Bezugstoff 10 überdeckt. Um das Einziehen in die Ausnehmungen 4, 7 zu begünstigen, ist der Bezugstoff 10 zudem im Bereich dieser Ausnehmungen 4, 7 als Netzstruktur mit höherer Elastizität gegenüber den umliegenden Bezugstoffbereichen ausgebildet.

Das erste Kassettenteil 5 und das zweite Kassettenteil 8 sind, wie dies der Fig. 2 zu entnehmen ist, als Gleichteile topfförmig ausgebildet und weisen jeweils einen am Sonnenblendenkörper 2 und dem Bezugstoff 10 anliegenden äußeren Randflansch 13, 14 auf. Die Festlegung der beiden Kassettenteile 5, 8 erfolgt im Bereich der durchgehenden Öffnung 9 über Rastverbindungen 15 an den Kassettenböden 16, 17, die den Bezugstoff 10 im Bereich der durchgehenden Öffnung 9 durchdringen.

Das erste Kassettenteil 5 umfaßt ferner eine nach oben ausklappbare Abdeckung 18, die im in der Fig. 1 und 2 dargestellten aufgeklappten Zustand in der Gebrauchsstellung der Sonnenblende 1 einen Spiegel 19 freigibt.

Das zweite Kassettenteil 8 weist ebenfalls eine nach oben ausklappbare Abdeckung 20 auf, die ein Ablagefach 21 abdeckt. Dieses Ablagefach 21 ist dem Benutzer in der Nichtgebrauchslage der Sonnenblende 1 zugänglich.

## Patentansprüche

1. Sonnenblende für Fahrzeuge, mit einem Sonnenblendenkörper, der an seiner einen Breitseite eine erste Ausnehmung zur Aufnahme eines ersten Funktionsteils und an seiner gegenüberliegenden Breitseite eine zweite Ausnehmung zur Aufnahme eines zweiten Funktionsteils aufweist und die beiden Funktionsteile miteinander verbunden und dadurch in den Ausnehmungen festgelegt sind, dadurch gekennzeichnet, daß der Sonnenblendenkörper (2) von einem elastischen Bezugstoff (10) als Hüllüberzug umgeben ist, durch den hindurch die Funktionsteile (5, 8) miteinander verbunden sind, dergestalt, daß der Bezugstoff (10) ohne Fensterausschnitt mit den Funktionsteilen (5, 8) mit in die Ausnehmungen (4, 7) eingezogen ist und sich an die randseitigen Ausnehmungswandungen (11, 12) anschmiegt sowie durch die gegenseitige, den Bezugstoff (10) durchdringende Verbindung (15) der beiden Funktionsteile (5, 8) festgelegt ist.

2. Sonnenblende nach Anspruch 1, dadurch gekennzeichnet, daß die Funktionsteile Kassetten (5, 8) sind, bevorzugt eine Spiegelkassette (5) an der Breitseite des Sonnenblendenkörpers (3), die dem Benutzer in der Gebrauchslage zugänglich ist und bevorzugt eine Ablagekassette (8) mit wenigstens einem Ablagefach (21) und/oder einem Ticketthalter an der anderen Breitseite (6) des Sonnenblendenkörpers (2), die dem Benutzer in der Nichtgebrauchslage zugänglich ist.

3. Sonnenblende nach Anspruch 2, dadurch gekennzeichnet, daß die Funktionsteile, bevorzugt als Kassetten (5, 8) topfförmig mit am Sonnenblendenkörper (2) und dem Bezugstoff (10) anliegenden äußeren Randflanschen (13, 14) ausgebildet sind.

4. Sonnenblende nach einem der Ansprüche 1 bis 3, dadurch gekennzeichnet, daß die Funktionsteile (5, 8) gegenseitige Rastverbindungen (15) aufweisen, bevorzugt als Kassetten mit Rastverbindungen an den Kassettenböden (16, 17) und/oder Kassetten-rahmen.

5. Sonnenblende nach einem der Ansprüche 1 bis 4, dadurch gekennzeichnet, daß die Funktionsteile (5, 8) bevorzugt als Kassetten hinsichtlich der Außenkontur und gegebenenfalls von Rasteinrichtungen spiegelbildlich als Gleichteile ausgeführt sind.

6. Sonnenblende nach einem der Ansprüche 1 bis 5, dadurch gekennzeichnet, daß der Bezugstoff (10) wenigstens im Bereich der Ausnehmungen (4, 7) eine Netzstruktur aufweist.

7. Sonnenblende nach einem der Ansprüche 1 bis 6, dadurch gekennzeichnet, daß zwischen den beiden Ausnehmungen (4, 7) ein Blendenkörpersteg als Materialwand belassen ist und die Verbindung der beiden Funktionsteile (5, 8) auch durch diese Materialwand hindurch bevorzugt über entsprechend lange Raststifte erfolgt.

8. Sonnenblende nach einem der Ansprüche 1 bis 6, dadurch gekennzeichnet, daß die beiden Ausnehmungen (4, 7) eine durchgehende Öffnung (9) im Sonnenblendenkörper (2) bilden, die in einer etwa mittleren Ebene nur vom Bezugstoff (10) überdeckt ist.

9. Sonnenblende nach Anspruch 8, dadurch gekennzeichnet, daß die beiden Funktionsteile (5, 8) bevorzugt als Kassetten über den Bezugstoff (10) direkt aneinander anliegen.

10. Sonnenblende nach einem der Ansprüche 1 bis 9, dadurch gekennzeichnet, daß Bereiche der Funktionsteile (5, 8) bevorzugt Kassettenteile, Kassettenfächer und/oder Abdeckungen (18, 20) nach oben oder nach unten ausklappbar angeordnet sind.
